# EUROPÄISCHE PATENTSCHRIFT

(11) **EP 3 304 664 B1**
(45) Veröffentlichungstag und Bekanntmachung des Hinweises auf die Patenterteilung: **10.03.2021**
(21) Anmeldenummer: 16733914.2
(22) Anmeldetag: 27.06.2016
(51) Int. Cl.: H02G 5/10, H01R 4/56, H01R 25/14, H02G 5/06

(54) **PHASENLEITERANORDNUNG**
PHASE CONDUCTOR ARRANGEMENT
DISPOSITIF DE CONDUCTEUR DE PHASE

(30) Priorität: 27.07.2015 DE 102015214126
(43) Veröffentlichungstag der Anmeldung: 11.04.2018
(73) Patentinhaber: Siemens Energy Global GmbH & Co. KG, 81739 München (DE)
(72) Erfinder: BUCHE, Daniel, 12459 Berlin (DE); SCHLIEDER, Patrick, 14621 Schönwalde-Glien (DE)
(86) Internationale Anmeldenummer: PCT/EP2016/064772
(87) Internationale Veröffentlichungsnummer: WO 2017/016771

(56) Entgegenhaltungen:
- EP-A1- 1 473 800
- EP-A1- 2 410 626
- WO-A1-2007/085424
- DE-A1- 1 665 349
- DE-A1- 3 103 433
- US-A1- 2011 284 264

## Beschreibung

Die Erfindung betrifft eine Phasenleiteranordnung für eine Elektroenergieübertragungseinrichtung aufweisend einen elektrisch leitfähigen Grundkörper, welcher sich längs einer Hauptachse erstreckt, sowie eine den Grundkörper durchsetzende im Wesentlichen streifenförmige Ausnehmung, wobei der Grundkörper ein Hohlzylinder ist, welcher die Ausnehmung in einer Mantelwandung aufweist, die der Ausnehmung gegenüberliegende Mantelwandung geschlossen ist und die Mantelwandung zumindest innenmantelseitig eine oberflächenvergrößernde Profilierung aufweist.

Eine Phasenleiteranordnung ist beispielsweise aus dem japanischen Gebrauchsmuster JP 5-50913 U bekannt. Dort ist eine Phasenleiteranordnung beschrieben, welche einen elektrisch leitfähigen Grundkörper aufweist, wobei sich der elektrisch leitfähige Grundkörper längs einer Hauptachse erstreckt. Der Grundkörper ist mit Ausnehmungen versehen, so dass einerseits eine stabile mechanische Struktur vorliegt, sowie andererseits eine günstige Durchströmung der Phasenleiteranordnung erfolgen kann.

Eine derartige Ausgestaltung ermöglicht ein Ein- und Ausströmen eines Fluides und damit eine Kühlung des dortigen elektrisch leitfähigen Grundkörpers. Jedoch erweist sich die Herstellung einer derartigen Phasenleiteranordnung als kostenintensiv. In den Grundkörper müssen mehrere Ausnehmungen eingebracht werden, wobei dazu verschiedene Fertigungsverfahren anwendbar sind. All diesen Fertigungsverfahren gemein ist jedoch, dass das Einbringen der Ausnehmungen einen erhöhten Fertigungsaufwand hervorruft.

Der EP 2 410 626 A1 ist ein Phasenleiter entnehmbar, welcher eine mantelseitige Ausnehmung aufweist, um innenwändig eine Trageeinrichtung zu verspannen, und offenbart die Merkmale des Oberbegriffs des Anspruchs 1. Der DE 16 65 349, US 2011/0284264 A1, WO 2007/085424 A1 sind jeweils Phasenleiter mit mantelseitigen Ausnehmungen entnehmbar, um innenwändig eine elektrische Kontaktierung vornehmen zu können. Die DE 31 03 433 A1 beschreibt eine rechteckige Stromschiene, welche von einem Kühlkörper umgriffen ist. Die EP 1 473 800 A1 beschreibt die Verwendung eines Faltenbalges, um zwei Rohrkörper zu verbinden und Dehnungsänderungen zu kompensieren.

Daher ergibt sich als Aufgabe der Erfindung, eine Phasenleiteranordnung anzugeben, welche einerseits eine gute Wärmeabgabe und andererseits den Einsatz kostengünstiger Fertigungsverfahren zur Herstellung der Phasenleiteranordnung ermöglicht.

Erfindungsgemäß wird die Aufgabe bei einer Phasenleiteranordnung der eingangs genannten Art dadurch gelöst, dass der Grundkörper eine stirnseitige Kontaktierungsfläche aufweist, welche im Wesentlichen einem Kreisringsegment entspricht, wobei Stege aus einer kreiszylindrischen Innenmantelfläche des Grundkörpers herausragen und radial nach innen in Richtung der Hauptachse hervorspringen und in den Stegen eine Verspanneinrichtung in der Stirnseite verteilt angeordnet ist.

Ein Hohlzylinder erstreckt sich längs einer Hohlzylinderachse (Hauptachse), wobei ein Hohlzylinder eine Mantelwandung aufweist, welche eine Hohlzylinderausnehmung umgibt. Die Hohlzylinderachse kann von einem idealen linearen Verlauf abweichen, so dass auch gekrümmte Verläufe vorliegen können. Hohlzylinder können dabei verschiedenartigste Querschnitte aufweisen. Bevorzugt sollte der Hohlzylinder einen kreisringförmigen Querschnitt aufweisen.

Durch die Verwendung einer streifenförmigen Ausnehmung können querschnittsgroße Ausnehmungen gebildet werden, welche sich in dem Grundkörper im Wesentlichen parallel zur Hohlzylinderachse bzw. zur Hauptachse erstrecken können. Die der Ausnehmung quer zur Hauptachse gegenüberliegende Mantelwandung sollte geschlossen, d. h. frei von einer Ausnehmung, sein. Durch eine Anordnung einer geschlossenen Mantelwandung der Ausnehmung gegenüberliegend kann ein Befördern einer Konvektion im Inneren der Phasenleiteranordnung erfolgen. Ein rasches Hindurchziehen von fluiden Medien durch die Phasenleiteranordnung wird durch ein Versperren eines direkten Strömungsweges quer zur Hohlzylinderachse verhindert. Gezielt kann aus dem Inneren der Phasenleiteranordnung Wärme abgeführt werden. Damit wird einem Einströmen von Wärme aus mantelseitigen Richtungen in den Grundkörper entgegengewirkt. Dabei wird der Querschnitt der Phasenleiteranordnung nur in geringem Umfange reduziert. Insbesondere bei einer streifenförmigen Erstreckung, die parallel zur Hauptachse ausgerichtet ist, wird trotz eines vergrößerten Querschnittes der Ausnehmung der zum Tragen eines elektrischen Stromes verbleibende Querschnitt (Stirnfläche) des Grundkörpers nur geringfügig reduziert. Die Ausnehmung kann insbesondere einer geschlossenen Mantelwandung diametral gegenüber liegen. Weiterhin ist durch einen Verzicht auf eine gegenüberliegende Ausnehmung die mechanische Festigkeit des Grundkörpers verbessert. Außerdem kann der Grundkörper beispielsweise zur Aufnahme von weiteren Elementen dienen. Beispielsweise kann der Grundkörper Abriebpartikel oder ähnliches in seinem Inneren auffangen, so dass die Abriebpartikel nach Art einer Teilchenfalle in der Phasenleiteranordnung geschirmt gehalten sind. Dadurch können Störungen eines den Grundkörper umgebenden Dielektrikums durch undefinierte Partikelansammlungen verhindert werden. Es kann jedoch auch vorgesehen sein, dass über die Ausnehmung ein Zugriff ins Innere des Grundkörpers möglich ist, so dass dort auch weitere Elemente, wie beispielsweise Sensoren oder ähnliches untergebracht werden können. Dies weist den Vorteil auf, dass zum einen ein mechanischer Schutz der im Inneren des Grundkörpers angeordneten Elemente gegeben ist, zum anderen wirkt die Phasenleiteranordnung auf Grund ihrer elektrisch leitenden Eigenschaften auch als faradayscher Käfig, so dass ein feldfreier Raum gegeben ist. Insbesondere Sensoren sind so mechanisch und dielektrisch geschützt.

Eine weitere Ausgestaltung kann vorsehen, dass die Ausnehmung sich in dem Grundkörper durchgängig erstreckt.

Eine durchgängige Ausnehmung kann längs der Hauptachse verlaufen, so dass der Grundkörper bevorzugt auf seiner gesamten Länge von der Ausnehmung durchsetzt ist. Dadurch ist die Möglichkeit gegeben, vereinfachte Fertigungsverfahren einzusetzen, um die Ausnehmung in dem Grundkörper anzuordnen. Besonders effizient kann der Grundkörper beispielsweise mittels eines Strangpressverfahrens gefertigt werden. Die Ausnehmung kann dabei fluchtend, d. h. parallel zur Hauptachse verlaufen und bereits während des Pressens ausgeformt werden. Es kann jedoch auch vorgesehen sein, dass die Ausnehmung koaxial zur Hauptachse angeordnet ist. So besteht beispielsweise die Möglichkeit, die Ausnehmung nach Art einer Wellenform oder schraubenförmig in dem Hohlzylinder anzuordnen.

Eine weitere vorteilhafte Ausgestaltung kann vorsehen, dass in dem Hohlzylinder eine Rinne gebildet ist, welche über die Ausnehmung zugänglich ist.

Eine Rinne weist eine im Wesentlichen konkav gewölbte Oberfläche auf, so dass schwerkraftgetrieben in der Rinne beispielsweise Fluide oder streufähige Partikel gesammelt werden können. Dies weist den Vorteil auf, Medien beispielsweise innerhalb der Phasenleiteranordnung zu sammeln bzw. diese innerhalb der Phasenleiteranordnung abzuleiten. Durch ein Einbringen einer Ausnehmung in eine Mantelwandung des Hohlzylinders kann die Rinne beispielsweise zumindest teilweise durch eine Innenmantelseite des Grundkörpers gebildet werden.

Es kann vorteilhaft vorgesehen sein, dass quer zur Hauptrichtung die Ausnehmung eine geringere Erstreckung aufweist als die Rinne.

Dadurch, dass die Ausnehmung quer zur Hauptrichtung eine geringere Erstreckung aufweist als die Rinne selbst, sind die Flanken der Rinne mit einer Hinterschneidung ausgestattet, so dass die Rinne einen stabilen dielektrisch geschirmten Bereich ausbildet. Die Flanken der Rinne schirmen die Rinne dielektrisch.

Erfindungsgemäss ist vorgesehen, dass die Mantelwandung zumindest innenmantelseitig eine Oberflächenvergrößernde Profilierung aufweist.

Mittels einer Profilierung kann die Oberfläche der Mantelwandung insbesondere innenmantelseitig vergrößert werden. Dadurch ist die Tendenz der Abgabe von thermischer Energie aus der Phasenleiteranordnung unterstützt. Neben einer positiven Beeinflussung der Wärmeabgabe an der Phasenleiteranordnung kann die Profilierung auch dazu genutzt werden, dielektrisch besonders zuverlässig geschirmte Bereiche auszubilden. So können sich beispielsweise radial ausgerichtete Nuten innenmantelseitig längs der Hauptachse erstrecken, wodurch innerhalb der Phasenleiteranordnung vorspringende Stege gebildet sind. Derartige Stege können auch genutzt werden, um weitere Baugruppen mit der Phasenleiteranordnung zu verbinden. Insbesondere bei der Nutzung von weiteren Elementen, welche innerhalb der Phasenleiteranordnung zu positionieren sind, können an den Stegen beispielsweise Haltepunkte angeordnet sein, um die weiteren Elemente bzw. Baugruppen an der Phasenleiteranordnung abzustützen.

Eine weitere vorteilhafte Ausgestaltung kann vorsehen, dass der Grundkörper ein winkelstarrer Körper ist.

Eine Ausbildung des Grundkörpers als winkelstarrer Körper ist von Vorteil, um ein Abstützen desselben in vereinfachter Form vorzusehen. So besteht die Möglichkeit, die Eigenstabilität des Grundkörpers zu nutzen und diesen lediglich punktuell zu stützen. Entsprechend kann der Grundkörper genutzt werden, um weitere Bauteile zu halten und zu positionieren. Die oben erwähnten weiteren Elemente können ihrerseits am Grundkörper abgestützt werden. So besteht beispielsweise die Möglichkeit, Temperaturen oder andere Zustandsgrößen der Phasenleiteranordnung bzw. des die Phasenleiteranordnung umgebenden Fluides unmittelbar in der Nähe der Phasenleiteranordnung zu erfassen.

Erfindungsgemäss ist vorgesehen, dass der Grundkörper eine stirnseitige Kontaktierungsfläche aufweist, welche im Wesentlichen einem Kreisringsegment entspricht.

Ein Kreisringsegment kann beispielsweise an einem hohlzylindrischen Grundkörper vorgesehen sein, wobei durch die Einbringung einer Ausnehmung in die Mantelwandung ein stirnseitiger Kreisring in ein Kreisringsegment aufgebrochen werden kann. Eine Stirnseite des Grundkörpers kann dabei der elektrischen Kontaktierung mit einem weiteren Element, beispielsweise einem weiteren Grundkörper oder einer Abschlussarmatur usw. dienen, so dass eine elektrische Kontaktierung des Grundkörpers bevorzugt über zumindest eine seiner Stirnseiten erfolgt. Dabei weicht das Kreisringsegment von einer idealen Kreisringform ab. Erfindungsgemäss sind durch Profilierungen von einer Innenmantelfläche des Grundkörpers, entsprechende Vorsprünge, wie z. B. Stege am Kreisringsegment vorgesehen. Es kann jedoch auch vorgesehen sein, dass beispielsweise ein gestauchtes oder gestrecktes Kreisringsegment Verwendung findet, so dass abweichend von einer idealen Kreisbahn eine elliptische Formgebung vorliegt. Weiter kann die Stärke der Mantelwandung des Kreisringsegmentes variieren, so dass beispielsweise auch sichelartige Kontaktierungsflächen entstehen können.

Gemäß der Erfindung ist vorgesehen, dass eine Verspanneinrichtung in der Stirnseite verteilt angeordnet ist.

Eine Verteilung einer Verspanneinrichtung in der Stirnseite weist den Vorteil auf, Kräfte in die Kontaktierungsfläche verteilt einzuleiten, so dass ein widerstandsarmer Übergang von dem Grundkörper zu einem weiteren elektrisch leitfähigen Kontaktelement (z.B. ein weiterer Grundkörper oder ein Armaturkörper) gegeben ist. Beispielsweise können als Verspanneinrichtung Bolzen, Schrauben, Niete, Klemmen, Gewindebohrungen usw. aufweisen.

Ferner beschrieben ist, dass in der Stirnseite des Grundkörpers eine zentrale Verspanneinrichtung angeordnet ist.

Durch die Verwendung einer zentralen Verspanneinrichtung kann die Montage eines Grundkörpers vereinfacht werden, da zu einem Verspannen eine zentrale Verspanneinrichtung Einsatz finden kann.

Dabei kann vorteilhaft vorgesehen sein, dass die zentrale Verspanneinrichtung an einem von dem Grundkörper umgriffenen Steg angeordnet ist.

Ein Steg, welcher von dem Grundkörper umgriffen ist, kann beispielsweise durch eine Profilierung der Innenmantelfläche der Mantelwandung des Grundkörpers gebildet sein. Beispielsweise kann der Steg bei einer zentrischen Anordnung der Verspanneinrichtung radial von dieser ausgehend mit dem Grundkörper verbunden sein, so dass Verspannkräfte über den Steg auf den Grundkörper übertragen werden können. Dabei kann die zentrale Verspanneinrichtung selbst Teil einer Strombahn sein. Es kann jedoch auch vorgesehen sein, dass die zentrale Verspanneinrichtung lediglich einem Verspannen einer Stirnseite des Grundkörpers dient.

Dabei kann vorteilhafterweise vorgesehen sein, dass der Steg der Ausnehmung diametral gegenüber liegt.

Durch die Anordnung des Steges diametral zur Ausnehmung gegenüberliegend ist die Möglichkeit gegeben, über die Ausnehmung auf den Steg zuzugreifen und diesen gegebenenfalls auch einer Bearbeitung zu unterziehen. Neben einem vereinfachten Zugriff ist die Möglichkeit der Verwendung eines derart positionierten Steges als Kühlrippe vorteilhaft, da dieser eine Wärmeabgabe aus dem Inneren des Grundkörpers zusätzlich befördern kann. Durch eine diametral gegenüberliegende Ausrichtung wird die Strömung im Inneren des Grundkörpers nur unwesentlich beeinträchtigt, so dass weiterhin ein vereinfachtes Ableiten von thermischer Energie aus dem Inneren des Grundkörpers über die Ausnehmung möglich ist. Weiter kann der Steg genutzt werden, um die Ausnehmung dielektrisch zu schirmen.

Eine weitere vorteilhafte Ausgestaltung kann vorsehen, dass die Ausnehmung von den freien Enden des Kreisringsegmentes begrenzt ist.

Die freien Enden des Kreisringsegmentes können beispielsweise die freien Enden von Flanken einer Rinne sein, welche die Rinne abschatten. Die freien Enden begrenzen dabei die Ausnehmung quer zur Hauptachse, so dass die azimutale Erstreckung der Ausnehmung begrenzt ist, wohingegen die axiale Erstreckung der Ausnehmung von den freien Enden des Kreisringsegmentes gerade nicht begrenzt ist.

Eine weitere vorteilhafte Ausgestaltung kann vorsehen, dass die Ausnehmung im Wesentlichen parallel zur Hauptachse verläuft.

Eine parallele Erstreckung zur Hauptachse ermöglicht es, die Ausnehmung beispielsweise im montierten Zustand bezüglich einer Vertikalen im oberen Bereich der Phasenleiteranordnung zur Ruhe kommen zu lassen. Die Hauptachse kann bevorzugt im Wesentlichen in einer Horizontalen liegen. Dadurch ist ein Abziehen von thermischer Energie durch die Ausnehmung zusätzlich unterstützt. Mit einem parallelen Verlauf zur Hauptachse weist die Ausnehmung dieselbe Orientierung der Hauptachse auf, wobei sich die Ausnehmung bevorzugt fluchtend zur Hauptachse durch den Grundkörper erstreckt.

Eine weitere vorteilhafte Ausgestaltung kann vorsehen, dass eine druckfluidisolierte Elektroenergieübertragungseinrichtung eine Phasenleiteranordnung nach einer der vorstehenden Ausgestaltungen aufweist.

Eine druckfluidisolierte Elektroenergieübertragungseinrichtung weist als elektrisch isolierendes Medium ein Fluid auf, welches unter Überdruck gesetzt wird. Dazu ist die Elektroenergieübertragungseinrichtung mit einem Druckbehälter ausgestattet, um das elektrisch isolierende Fluid einzugrenzen und unter Überdruck setzen zu können. Der Phasenleiter ist dabei innerhalb des Druckbehälters angeordnet, wobei dieser im Regelfalle elektrisch isoliert gegenüber dem Druckbehälter gehalten ist bzw. der Druckbehälter selbst elektrisch isolierend wirkt. Als Fluide eigenen sich bevorzugt Gase oder auch Flüssigkeiten, wobei sich als bevorzugte Gase Schwefelhexafluorid, Stickstoff, Kohlendioxid, fluorketonhaltige Fluide, insbesondere Gase, oder fluornitrilhaltige Fluide, insbesondere Gase, gezeigt haben. Das elektrisch isolierende Fluid umspült den Phasenleiter/den Grundkörper und durchströmt diesen auch. Neben einem elektrischen Isolieren kann das Fluid auch einer Ableitung von Wärme dienen. Es kann eine Nutzung der erfindungsgemäßen Anordnung in einer Elektroenergieübertragungseinrichtung erfolgen, welche eine einphasige oder mehrphasige Isolation aufweist. Bei einer mehrphasigen Isolation sind mehrere Grundkörper mehrerer Phasen eines Elektroenergieübertragungssystems von demselben Fluid umspült. Bei einer einphasigen Isolation werden zur Isolation mehrerer Grundkörper verschiedener Phasen eines Elektroenergieübertragungssystems voneinander separierte Fluide genutzt.

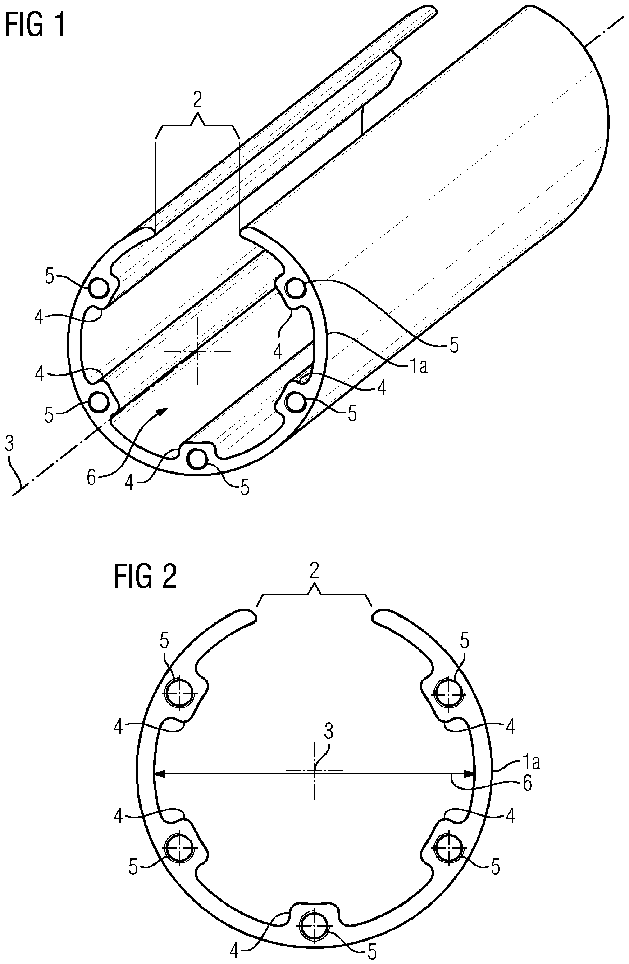

Im Folgenden wird ein Ausführungsbeispiel der Erfindung schematisch in einer Zeichnung gezeigt und nachfolgend näher beschrieben, wobei die Figuren 1 und 2 erfindungsgemäße Ausgestaltungen sind und die Figuren 3 bis 9 nicht erfindungsgemäße Ausgestaltungen zeigen. Dabei zeigt die
- Figur 1:: eine perspektivische Ansicht einer Phasenleiteranordnung in einer ersten Ausführungsvariante, die
- Figur 2:: eine stirnseitige Ansicht der Phasenleiteranordnung nach Figur 1, die

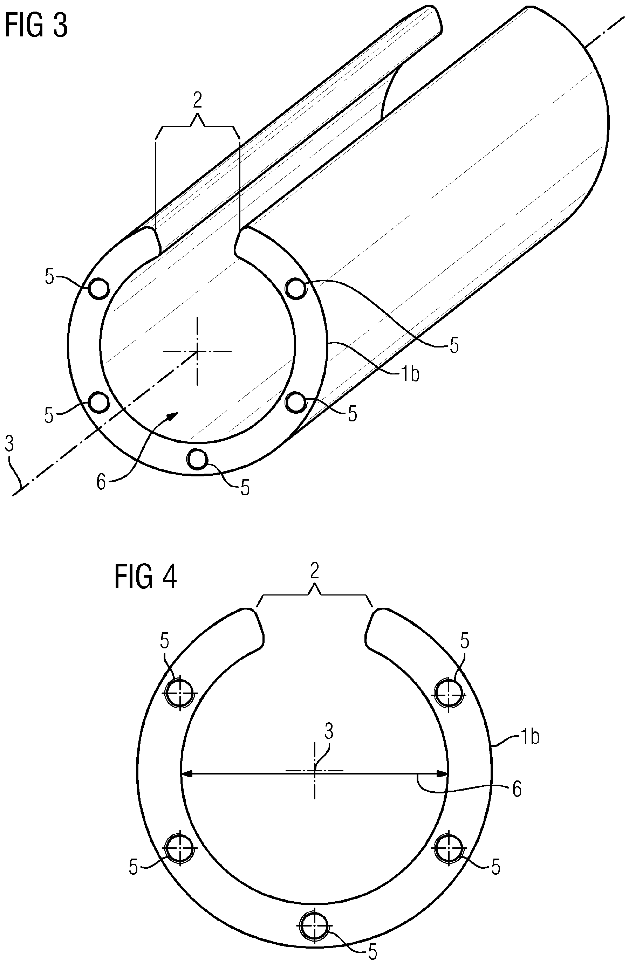

- Figur 3:: eine perspektivische Ansicht einer zweiten Phasenleiteranordnung, die nicht Teil der Erfindung ist, die
- Figur 4:: eine stirnseitige Ansicht der Phasenleiteranordnung nach Figur 3, die

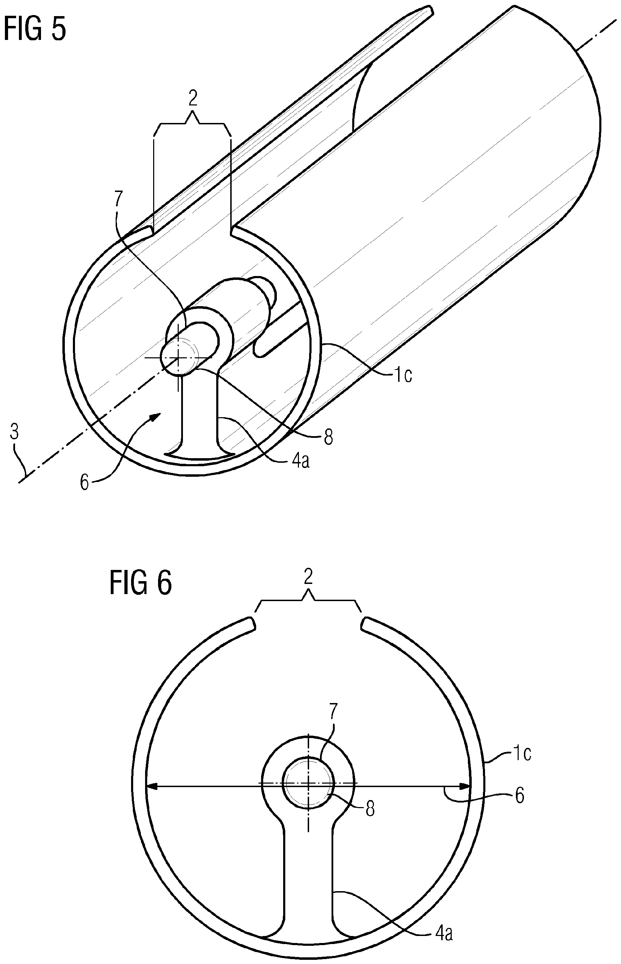

- Figur 5:: eine perspektivische Ansicht einer dritten Phasenleiteranordnung, die nicht Teil der Erfindung ist, die
- Figur 6:: eine stirnseitige Ansicht der Phasenleiteranordnung nach Figur 5, die

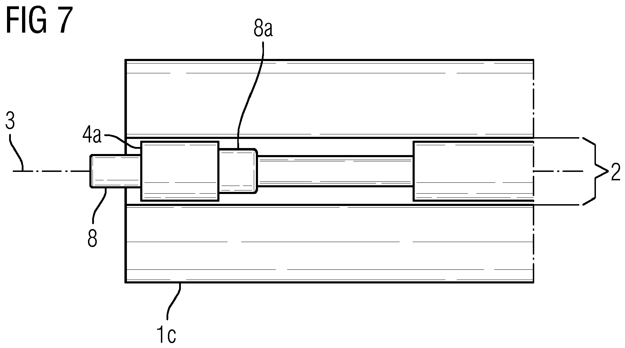

- Figur 7:: eine Draufsicht der Phasenleiteranordnung nach Figur 5, die

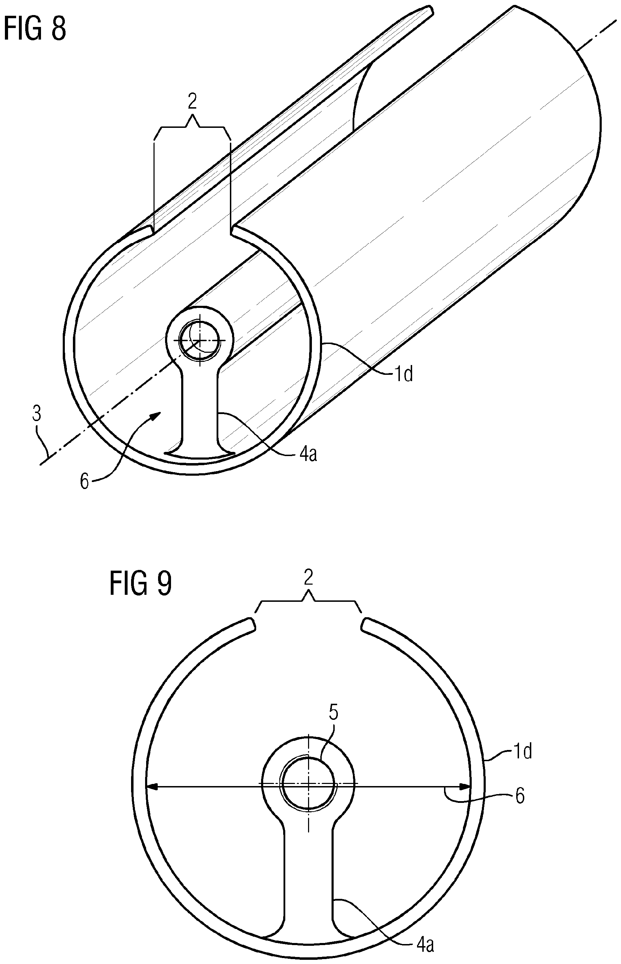

- Figur 8:: eine perspektivische Ansicht einer vierten Phasenleiteranordnung, die nicht Teil der Erfindung ist, und die
- Figur 9:: eine stirnseitige Ansicht der Phasenleiteranordnung gemäß Figur 8.

Die in den Figuren 1 bis 9 gezeigten Phasenleiteranordnungen weisen jeweils grundsätzlich dieselbe Konstruktion auf, nach welcher ein Grundkörper als Hohlzylinder ausgebildet ist, der eine Ausnehmung in einer Mantelwandung aufweist, wobei die Mantelwandung auf einer der Ausnehmung diametral gegenüber liegenden Seite geschlossen ist.

Im Folgenden soll zunächst anhand der Figur 1 der grundsätzliche Aufbau einer erfindungsgemässen Phasenleiteranordnung beschrieben werden, wobei in den weiteren Phasenleiteranordnungen zwei bis vier das Ausgeführte mutatis mutandis gilt. Zu den weiteren Phasenleiteranordnungen zwei bis vier wird auf Abweichungen gegenüber den Figuren 1 und 2, in welchen eine Ausführungsvariante einer Phasenleiteranordnung gezeigt ist, eingegangen. Die Figur 1 zeigt eine perspektivische Ansicht einer Phasenleiteranordnung 1a in einer Ausführungsvariante. Die Phasenleiteranordnung 1a in der Ausführungsvariante weist einen hohlzylindrischen Grundkörper auf, welcher eine Ausnehmung 2 in einer Mantelwandung aufweist. Dabei ist der Grundkörper der Phasenleiteranordnung 1a der Ausführungsvariante koaxial zu einer Hauptachse 3 ausgerichtet. Die Ausnehmung 2 erstreckt sich längs der Hauptachse 3 über die gesamte axiale Erstreckung des Grundkörpers, wobei die Ausnehmung 2 im Wesentlichen streifenförmig ausgeführt ist und parallel zur Hauptachse 3 verläuft. Neben einem parallelen Verlauf kann auch ein koaxialer Verlauf, beispielsweise in Schraubenform oder Wellenform vorgesehen sein. Da die Ausnehmung 2 den Grundkörper auf seiner gesamten Länge durchsetzt, ist die Ausnehmung 2 endseitig, also in den Stirnseiten der Phasenleiteranordnung 1a in der Ausführungsvariante nicht durch den Grundkörper der Phasenleiteranordnung 1a in der Ausführungsvariante selbst begrenzt. Eine Begrenzung der Ausnehmung 2 quer zur Hauptachse 3 erfolgt durch die freien Enden der Mantelwandung, welche einen linearen Verlauf aufweisen und parallel zueinander sowie parallel zur Hauptachse 3 ausgerichtet sind. Die Ausnehmung 2 bricht einen im Wesentlichen kreisringförmigen Querschnitt in einen im Wesentlichen kreisringsegmentförmigen Querschnitt auf.

Die Phasenleiteranordnung 1a in der Ausführungsvariante ist aus einem elektrisch leitenden Material, beispielsweise einer Aluminiumlegierung oder einer Kupferlegierung ausgeführt. Außenmantelseitig ist die Mantelfläche des Grundkörpers konvex gekrümmt, da die äußere Hüllkontur des Grundkörpers einem Kreis entspricht. Innenmantelseitig ist die kreiszylindrische Innenmantelfläche von Stegen 4 durchsetzt. Die Stege 4 ragen aus einer kreiszylindrischen Innenmantelfläche des Grundkörpers heraus und springen radial nach innen in Richtung der Hauptachse 3 hervor. Die Stege 4 verlaufen dabei parallel zueinander sowie parallel zu der Hauptachse 3. Die Stege 4 verlaufen linear gestreckt. Die Stege 4 weisen den gleichen axialen Verlauf wie die Ausnehmung 2 auf. Die Stege 4 können jedoch auch abweichende Verläufe aufweisen. Die Stege 4 können beispielsweise auch schraubenförmig oder wellenförmig verlaufen. Vorteilhaft weisen die Ausnehmung 2 und die Stege 4 einander ähnelnde bzw. gleiche Verläufe auf. Weiterhin sind die Stege 4 auch parallel zu den Körperkanten der Phasenleiteranordnung 1a in der Ausführungsvariante angeordnet, welche die Ausnehmung 2 in einer Richtung quer zur Hauptachse 3 begrenzen. Stirnseitig sind in den Stegen 4 Gewindebohrungen 5 eingebracht. Die Gewindebohrungen 5 wirken als Verspanneinrichtung. Über die Gewindebohrungen 5 ist es möglich, an die Phasenleiteranordnung 1a in der Ausführungsvariante bzw. den Grundkörper derselben ein weiteres Element anzuschrauben. Beispielsweise kann ein den Grundkörper abschließender Armaturkörper stirnseitig mit dem Grundkörper der Phasenleiteranordnung 1a in der Ausführungsvariante verbunden werden. Die Stirnseite des Grundkörpers ist dabei als elektrisch leitfähige Kontaktierungsfläche ausgebildet, so dass ein elektrisches Kontaktieren der Phasenleiteranordnung 1a in der Ausführungsvariante über eine Stirnseite möglich ist. Die Gewindebohrungen 5 liegen dabei in einer Stirnseite der Phasenleiteranordnung 1a in der Ausführungsvariante verteilt und münden innerhalb der zur elektrischen Kontaktierung vorgesehenen Stirnfläche des Grundkörpers der Phasenleiteranordnung 1a in der Ausführungsvariante. Dadurch ist es möglich, Kräfte flächig und verspannungsfrei in den Grundkörper der Phasenleiteranordnung 1a in der Ausführungsvariante einzuleiten. Vorteilhaft kann ein derartiger Grundkörper für eine Phasenleiteranordnung 1a in der Ausführungsvariante, beispielsweise in einem Strangpressverfahren hergestellt werden. Eine Phasenleiteranordnung kann so unter Nutzung eines Halbzeuges hergestellt werden. Durch ein Ablängen desselben kann bedarfsweise eine Phasenleiteranordnung in einer bestimmten Struktur bzw. Länge ausgeführt werden. Ausnehmungen für die Gewindebohrungen 5 können dabei ebenfalls während eines Strangpressverfahrens durchgängig eingebracht werden, so dass nach einem Ablängen lediglich ein Gewindeschneiden zu erfolgen braucht. Es kann jedoch auch vorgesehen sein, dass die Gewindebohrungen 5 nachträglich in den Grundkörper eingebracht werden.

In der Figur 1 ist eine Einbaulage der Phasenleiteranordnung 1a in der Ausführungsvariante gezeigt, in welcher bezüglich einer Lotrechten die Ausnehmung 2 an einem oberen Ende der Phasenleiteranordnung 1a in der Ausführungsvariante positioniert ist. Die Hauptachse 3 ist im Wesentlichen waagerecht angeordnet. Somit besteht die Möglichkeit, vereinfacht Wärme aus dem Inneren der Phasenleiteranordnung 1a in der Ausführungsvariante herauszuleiten bzw. auch Partikel im Inneren der Phasenleiteranordnung 1a aufzufangen bzw. aufzunehmen und die Phasenleiteranordnung 1a als Teilchenfalle zu verwenden.

Die Figur 2 zeigt eine stirnseitige Ansicht der Phasenleiteranordnung 1a in der Ausführungsvariante wie aus der Figur 1 bekannt.

In den Figuren 3 und 4 ist eine perspektivische Ansicht bzw. eine stirnseitige Ansicht einer Phasenleiteranordnung 1b in einer zweiten Ausgestaltung gezeigt. Die Ausführungen zu der Phasenleiteranordnung 1a in der Ausführungsvariante gelten analog bezüglich der Phasenleiteranordnung 1b in zweiter Ausgestaltung. Gleiches gilt für die Phasenleiteranordnungen 1c, 1d in dritter und vierter Ausgestaltungen. Bei der Phasenleiteranordnung 1b in zweiter Ausgestaltung wurde eine Variation des Querschnittes vorgenommen. Die Phasenleiteranordnung 1b in zweiter Ausgestaltung weist gegenüber der Phasenleiteranordnung 1a in der Ausführungsvariante einen verstärkten Querschnitt auf. Auf ein zusätzliches Anordnen von Stegen 4 innenmantelseitig konnte bei der Phasenleiteranordnung 1b in zweiter Ausgestaltung verzichtet werden. Die Gewindebohrungen 5 sind unmittelbar in eine ringsegmentförmige Stirnfläche der Phasenleiteranordnung 1b in zweiter Ausgestaltung eingebracht. Auch hier befindet sich eine Ausnehmung 2 durchgängig in einer Mantelwandung, wobei die Ausnehmung 2 einen Zugang zu einer Rinne 6 (analog Figuren 1 und 2) ermöglicht, in welcher ein dielektrisch geschirmter Bereich vorliegt. In der Rinne 6 können beispielsweise Partikel gesammelt werden oder weitere Einbauten untergebracht werden. So ist es beispielsweise möglich, innerhalb der Rinne 6 beispielsweise Sensoren anzuordnen. Auch bei der Phasenleiteranordnung 1a in der Ausführungsvariante ist eine Rinne 6 gebildet, wobei durch die Stege 4 eine Profilierung der Rinne 6 erfolgt ist.

In den Figuren 5, 6, 7, 8 und 9 sind Phasenleiteranordnungen 1c, 1d in einer dritten und einer vierten Ausgestaltung gezeigt. Abweichend zu der Verwendung und Anordnung von Verspanneinrichtungen der Phasenleiteranordnungen 1a, 1b der ersten Ausführung und der zweiten Ausgestaltung ist nunmehr eine zentrische Anordnung einer Verspanneinrichtung vorgesehen.

In der Figur 5 ist eine perspektivische Ansicht einer Phasenleiteranordnung 1c in dritter Ausgestaltung dargestellt. Der Grundkörper weist wiederum eine hohlzylindrische Grundstruktur auf, wobei eine Mantelwandung von einer Ausnehmung 2 durchsetzt ist. Die Ausnehmung 2 weist eine ähnliche Dimension (bezüglich des Querschnittes) zu den Ausnehmungen 2 der ersten Ausführungsvariante bzw. der zweiten Ausgestaltung 1b einer Phasenleiteranordnung auf. Entsprechend ergibt sich für die stirnseitige Kontaktierungsfläche der Phasenleiteranordnung 1c in der dritten Ausgestaltung ein Ringsegment. Um die Phasenleiteranordnung 1c in dritter Ausgestaltung mit weiteren Bauteilen, beispielsweise weiteren Grundkörpern oder Armaturkörpern zu verbinden, ist innenmantelseitig ein Steg 4a angegossen. Der Steg 4a erstreckt sich im Wesentlichen radial zur Hauptachse 3 und ragt in die Hauptachse 3 hinein, so dass der Steg 4a von der Hauptachse 3 durchsetzt ist. Dabei ist der Steg 4a derart positioniert, dass dieser radial zur Hauptachse 3 ausgerichtet ist und dabei an einer Innenmantelseite des Grundkörpers der Phasenleiteranordnung 1c in dritter Ausgestaltung diametral gegenüber der Ausnehmung 2 in den Grundkörper übergeht. Dadurch kann über die Ausnehmung 2 lotrecht auf den Steg 4a zugegriffen werden. Eine derartige lotrechte Draufsicht ist in der Figur 7 dargestellt. Der Steg 4a unterteilt eine Rinne 6 der Phasenleiteranordnung 1c in dritter Ausgestaltung.

Um beispielsweise eine Verbindung mittels eines Gewindebolzens vorzunehmen, ist der Steg 4a mit einer koaxial zur Hauptachse 3 ausgerichteten Bohrung 7 (Verspanneinrichtung) versehen. Die Bohrung 7 erstreckt sich durch den Steg 4a und mündet an einem stirnseitigen Ende des Steges 4a. Es besteht die Möglichkeit, über die Ausnehmung 2 Teile des Steges 4a auszuklinken, bzw. den Steg 4a teilweise zu entfernen, so dass auf einer von der stirnseitigen Mündungsöffnung der Bohrung 7 abgewandten Seite eine weitere Mündungsöffnung der Bohrung 7 positioniert ist. In diese Bohrung 7 ist dann ein Gewindebolzen 8 einlegbar, welcher einen Bolzenkopf 8a aufweist, welcher auf der von der stirnseitigen Mündungsöffnung der Bohrung 7 abgewandten Seite am Steg 4a zur Anlage kommt (vgl. Fig. 7). Über die Ausnehmung 2 ist mittels eines Werkzeuges eine Rotation am Bolzenkopf 8a auf den Gewindebolzen 8 einleitbar.

In der stirnseitigen und perspektivischen Ansicht der Phasenleiteranordnung 1c in der dritten Ausgestaltung in Figur 6 ist erkennbar, dass am stirnseitigen Ende der Steg 4a zu der Ebene der Kontaktierungsfläche, welche als Kreisringsegment ausgebildet ist, versetzt angeordnet ist. Dadurch ist sichergestellt, dass bei einem Verspannen mittels des Gewindebolzens 8a ein galvanischer Kontakt bevorzugt über die kreisringförmige Kontaktierungsfläche erfolgt, so dass ein widerstandsarmer Übergangswiderstand zwischen dem Grundkörper der Phasenleiteranordnung 1c in dritter Ausgestaltung und dem weiteren mit diesem zu verbindenden Element, beispielsweise einem Armaturkörper, herstellbar ist.

Die aus den Figuren 5, 6 und 7 bekannte Phasenleiteranordnung 1c in dritter Ausgestaltung kann beispielsweise mit einer Phasenleiteranordnung 1d in vierter Ausgestaltung (Figuren 8, 9) verspannt werden. Dabei kann zur Ausbildung der Phasenleiteranordnung 1d in vierter Ausgestaltung der gleiche Grundkörper verwendet werden, wie bei der Phasenleiteranordnung 1c in dritter Ausgestaltung wie aus den Figuren 5, 6 und 7 bekannt. Lediglich ist nunmehr vorgesehen, dass an dem Steg 4a eine Gewindebohrung 5 eingebracht ist, welche koaxial zur Hauptachse 3 ausgerichtet ist, so dass beispielsweise ein Verspannen der Phasenleiteranordnung 1d in vierter Ausgestaltung über einen Gewindebolzen 8, wie aus der Phasenleiteranordnung 1c in dritter Ausgestaltung bekannt, vorgenommen werden kann. Analog zur dritten Ausgestaltung der Phasenleiteranordnung 1c ist der Steg 4a zur Ebene der Kontaktierungsfläche versetzt, so dass die Kontaktierungsflächen einander berühren und über ein Verspannen des Gewindebolzens 8 in der Gewindebohrung 5 eine Spannkraft zwischen Phasenleiteranordnungen 1c, 1d in der dritten bzw. vierten Ausgestaltung herbeigeführt werden kann.

Um ein modulares Aneinanderreihen von Phasenleiteranordnungen zu ermöglichen, kann auch vorgesehen sein, dass bei einer zylindrischen Struktur einer Phasenleiteranordnung die voneinander abgewandten Stirnseiten unterschiedlich, bevorzugt gegengleich ausgebildet sind, so dass gleichartig aufgebaute Phasenleiteranordnungen miteinander gekoppelt werden können. So können beispielsweise die in den Figuren 5, 6, 7 sowie 8, 9 gezeigten Phasenleiteranordnungen 1c, 1d in dritter und vierter Ausgestaltung jeweils endseitig mit einer der beiden Varianten ausgestattet sein, so dass ein modulares Verlegen und Aneinanderkoppeln gleichartiger Phasenleiteranordnungen erfolgen kann.

Analoges gilt auch für die Ausgestaltung der in den Figuren 1 und 2 bzw. 3 und 4 gezeigten Phasenleiteranordnungen 1a, 1b. Auch dort können die in den Figuren 1 und 3 vom Betrachter abgewandten Stirnseiten gegengleich ausgebildet werden, so dass ein Verspannen der Gewindebohrungen 5 in den dem Betrachter zugewandten Stirnseiten, beispielsweise mittels Gewindebolzen vorgenommen werden kann. Dann ist es möglich, gleichartig aufgebaute Phasenleiteranordnungen modular aufeinander folgend in nahezu endloser Reihung miteinander zu kontaktieren und mechanisch sowie elektrisch zu verbinden.

Die in den Figuren 1, 2, 3, 4, 5, 6, 7, 8 und 9 gezeigten Phasenleiteranordnungen 1a, 1b, 1c, 1d in den verschiedenen Ausgestaltungen weisen jeweils eine Ausnehmung 2 auf, durch welche eine Mantelwandung eines hohlzylindrischen Grundkörpers durchbrochen ist. Als Querschnitt des Hohlzylinders eigenen sich dabei Kreisringe, welche durch die Ausnehmung 2 in ein Kreisringsegment aufgebrochen sind. Zusätzlich können innenmantelseitig oder auch außenmantelseitig Stege 4, 4a angeordnet sein, welche im Querschnitt das Kreisringsegment profilieren. Alternativ oder zusätzlich können auch Einkerbungen bzw. Nuten an dem Kreisringsegment vorgesehen sein. Neben einer idealen kreisrunden Ausgestaltung von Kreisringen können auch elliptische oder ovale Hohlzylinder Verwendung finden. Bedarfsweise können auch davon abweichende beliebige Querschnitte Verwendung finden.

Über die Ausnehmungen 2 der verschiedenen Phasenleiteranordnungen 1a, 1b, 1c, 1d ist jeweils ein Zugang zu einer Rinne 6 gegeben, welche von der verbliebenen Mantelwandung umgriffen ist. Auf Grund der elektrisch leitfähigen Ausgestaltung der Phasenleiteranordnungen 1a, 1b, 1c, 1d bildet sich so innerhalb einer Phasenleiteranordnung 1a, 1b, 1c, 1d ein dielektrisch geschirmter Raum, innerhalb welchem beispielsweise Fremdstoffe, Partikel usw. eingelagert werden können, so dass diese in einem feldfreien Raum keine Störungen von elektrischen Feldern außerhalb der Phasenleiteranordnung 1a, 1b, 1c, 1d bewirken können. Darüber hinaus können beispielsweise in die Rinne 6 auch Sensoren oder andere Elemente eingebaut werden, um beispielsweise die Phasenleiteranordnung 1a, 1b, 1c, 1d oder auch ein elektrisch isolierendes Medium, welches die Phasenleiteranordnung 1a, 1b, 1c, 1d umspült, zu überwachen. Bevorzugt sollte die Ausnehmung in einer Einbaulage der Phasenleiteranordnung 1a, 1b, 1c, 1d bezüglich einer Vertikalen im oberen Drittel der Phasenleiteranordnung 1a, 1b, 1c, 1d positioniert sein, so dass innerhalb der Rinne 6 zum einen ein Sammeln und Aufnehmen von Teilchen bzw. Baugruppen möglich ist, zum anderen über die Ausnehmung 2 auch ein Abströmen von thermischer Energie aus dem Inneren der Phasenleiteranordnung 1a, 1b, 1c, 1d möglich ist. Weiterhin kann durch die im Bodenbereich geschlossene Rinne 6 gegebenenfalls auch ein Ableiten von Fluiden wie Kondensflüssigkeit oder ähnlichem innerhalb der jeweiligen Phasenleiteranordnung 1a, 1b, 1c, 1d in Richtung der Hauptachse 3 vorgesehen sein. Über die Ausnehmung 2 ist ein Zugang zum Inneren der Phasenleiteranordnung 1a, 1b, 1c, 1d gegeben. Innerhalb der Phasenleiteranordnung 1a, 1b, 1c, 1d vorgesehene Stege 4, 4a können eine oberflächenvergrößernde Struktur bilden, so dass ein Abgeben von Wärme aus dem Inneren der Phasenleiteranordnung 1a, 1b, 1c, 1d zusätzlich unterstützt wird. Die Stege 4, 4a sollten bevorzugt fluchtend bzw. parallel zur Hauptachse 3 verlaufen.

## Patentansprüche

1. Phasenleiteranordnung (1a) für eine Elektroenergieübertragungseinrichtung aufweisend einen elektrisch leitfähigen Grundkörper, welcher sich längs einer Hauptachse (3) erstreckt, sowie eine den Grundkörper durchsetzende im Wesentlichen streifenförmige Ausnehmung (2), wobei
der Grundkörper ein Hohlzylinder ist, welcher die Ausnehmung in einer Mantelwandung aufweist, wobei die der Ausnehmung (2) gegenüberliegende Mantelwandung geschlossen ist und die Mantelwandung zumindest innenmantelseitig eine oberflächenvergrößernde Profilierung (4) aufweist,
**dadurch gekennzeichnet, dass** der Grundkörper eine stirnseitige Kontaktierungsfläche aufweist, welche im Wesentlichen einem Kreisringsegment entspricht, wobei Stege (4) aus einer kreiszylindrischen Innenmantelfläche des Grundkörpers herausragen und radial nach innen in Richtung der Hauptachse (3) hervorspringen und in den Stegen eine Verspanneinrichtung (5, 7) in der Stirnseite verteilt angeordnet ist.

2. Phasenleiteranordnung nach Anspruch 1,
**dadurch gekennzeichnet,**
**dass** die Ausnehmung (2) sich in dem Grundkörper durchgängig erstreckt.

3. Phasenleiteranordnung nach Anspruch 1 oder 2,
**dadurch gekennzeichnet,**
**dass** in dem Hohlzylinder eine Rinne (6) gebildet ist, welche über die Ausnehmung (2) zugänglich ist.

4. Phasenleiteranordnung einem der Ansprüche 1 bis 3,
**dadurch gekennzeichnet,**
**dass** quer zur Hauptrichtung die Ausnehmung (2) eine geringere Erstreckung aufweist als die Rinne (6).

5. Phasenleiteranordnung nach einem der Ansprüche 1 bis 4,
**dadurch gekennzeichnet,**
**dass** der Grundkörper ein winkelstarrer Körper ist.

6. Phasenleiteranordnung nach einem der Ansprüche 1 bis 5,
**dadurch gekennzeichnet,**
**dass** die Ausnehmung (2) von den freien Enden des Kreisringsegmentes begrenzt ist.

7. Phasenleiteranordnung nach einem der Ansprüche 1 bis 6,
**dadurch gekennzeichnet,**
**dass** die Ausnehmung (2) im Wesentlichen parallel zur Hauptachse (3) verläuft.

8. Druckfluidisolierte Elektroenergieübertragungseinrichtung
**dadurch gekennzeichnet,**
**dass** die Elektroenergieübertragungseinrichtung eine Phasenleiteranordnung nach einem der Patentansprüche 1 bis 7 aufweist.

## Claims

1. Phase conductor arrangement (1a) for an electrical energy transmission device comprising an electrically conductive base body, which extends along a main axis (3), and also a cut-out (2) that is essentially strip-shaped and extends along the base body, wherein the base body is a hollow cylinder that comprises the cut-out in a peripheral wall, wherein the peripheral wall that lies opposite the cut-out (2) is closed and the peripheral wall comprises at least on the inner peripheral face a profiled structure (4) that increases the surface area,
**characterized in that** the base body comprises an end-face side contacting surface that corresponds essentially to an annular segment, wherein webs (4) protrude out of a circular cylindrical inner peripheral face of the base body and protrude radially inward in the direction of the main axis (3) and a tensioning device (5, 7) is arranged in a distributed manner in the end face in the webs.

2. Phase conductor arrangement according to Claim 1,
**characterized**
**in that** the cut-out (2) extends in a continuous manner along the base body.

3. Phase conductor arrangement according to Claim 1 or 2,
**characterized**
**in that** a groove (6) that is accessible via the cut-out (2) is formed in the hollow cylinder.

4. Phase conductor arrangement according to one of Claims 1 to 3,
**characterized**
**in that** the cut-out (2) has a shorter extension in a transverse manner with respect to the main direction than the groove (6).

5. Phase conductor arrangement according to one of Claims 1 to 4,
**characterized**
**in that** the base body is an angle-rigid body.

6. Phase conductor arrangement according to one of Claims 1 to 5,
**characterized**
**in that** the cut-out (2) is delimited by the free ends of the annular segment.

7. Phase conductor arrangement according to one of Claims 1 to 6,
**characterized**
**in that** the cut-out (2) extends essentially parallel with the main axis (3).

8. Electrical energy transmission device that is insulated by pressurized fluid,
**characterized**
**in that** the electrical energy transmission device comprises a phase conductor arrangement according to one of Claims 1 to 7.

## Revendications

1. Agencement (1a) de conducteur de phase d'un dispositif de transport d'énergie électrique, comportant un corps de base conducteur de l'électricité, qui s'étend suivant un axe (3) principal, ainsi qu'un évidement (2) sensiblement en forme de bande traversant le corps de base, le corps de base étant un cylindre creux, qui a l'évidement dans une surface latérale, la surface latérale opposée à l'évidement (2) étant fermée et la surface latérale ayant, au moins du côté intérieur, un profilage (4) agrandissant la surface,
**caractérisé en ce que** le corps de base a une surface de mise en contact du côté frontal, qui correspond sensiblement à un segment annulaire de cercle, des nervures (4) faisant saillie d'une surface latérale intérieure cylindrique de section circulaire du corps de base et faisant saillie radialement vers l'intérieur en directement de l'axe (3) principal et dans les nervures est disposé, de manière répartie dans le côté frontal, un dispositif (5, 7) de serrage.

2. Agencement de conducteur de phase suivant la revendication 1,
**caractérisé en ce que**
l'évidement (2) s'étend d'une manière générale dans le corps de base.

3. Agencement de conducteur de phase suivant la revendication 1 ou 2,
**caractérisé en ce que**
dans le cylindre creux est formé une goulotte (6) qui est accessible par l'évidement (2).

4. Agencement de conducteur de phase suivant l'une des revendications 1 à 3,
**caractérisé en ce que**
transversalement à la direction principale, l'évidement (2) a une étendue plus petite que la goulotte (6).

5. Agencement de conducteur de phase suivant l'une des revendications 1 à 4,
**caractérisé en ce que**
le corps de base immobile angulairement.

6. Agencement de conducteur de phase suivant l'une des revendications 1 à 5,
**caractérisé en ce que**
l'évidement (2) est délimité par les extrémités libres du segment annulaire de cercle.

7. Agencement de conducteur de phase suivant l'une des revendications 1 à 6,
**caractérisé en ce que**
l'évidement (2) s'étend sensiblement parallèlement à l'axe (3) principal.

8. Dispositif de transport d'énergie électrique à isolant par du fluide sous pression,
**caractérisé en ce que**
le dispositif de transport d'énergie électrique a un agencement de conducteur de phase suivant l'une des revendications 1 à 7.
